# EUROPEAN PATENT APPLICATION

(11) **EP 4 311 518 A1**
(43) Date of publication of application: **31.01.2024**
(21) Application number: 22382717.1
(22) Date of filing: 26.07.2022
(51) Int. Cl.: A61C 7/00, A61C 7/08, A61C 7/14

(54) **ATTACHMENTS FOR USE IN ORTHODONTIC TREATMENTS**

(71) Applicant: Orthodontic Research and Development, S.L., 08017 Barcelona (ES)
(72) Inventor: CARRIERE LLUCH, Luis, 08017 Barcelona (ES)
(74) Representative: de Rooij, Mathieu Julien

(57) **Abstract**

The present disclosure relates to orthodontic attachments (10), and orthodontic transfer trays (40) comprising pockets (35) with the orthodontic attachments (10) and related methods (100, 200, 300). An orthodontic attachment (10) may comprise a prefabricated rigid body (15) comprising a base surface (18) configured for posterior bonding to a tooth. The prefabricated rigid body (15) is sized and shaped to direct forces of a teeth shell (20) when the teeth shell (20) surrounds the orthodontic attachment and rests against the tooth. The present disclosure further relates to methods of treatment, and manufacturing methods, and computer systems and programs useful in such methods.

## Description

The present disclosure relates to attachments for orthodontic treatments and methods. More particularly, the present disclosure relates to methods for using and methods for bonding attachments in combination with shells.

### BACKGROUND

The correction of dental irregularities and malocclusions by applying controlled forces to the teeth has become commonplace. Orthodontists offer a wide range of treatment options to straighten crooked teeth, fix irregular bites and align the jaws correctly. There are many ways to adjust malocclusion. Sometimes teeth are extracted to aid the orthodontic treatment.

An orthodontist may order the orthodontic devices from a manufacturer of choice.

An orthodontic treatment desired by many people nowadays is teeth straightening. Aligners, i.e. shells covering an arch of teeth, may be used to this end instead of brackets, as aligners may have a more pleasant design and appearance than brackets. Transparent or translucent custom-made aligners commercialized under the name Invisalign^{®} and under other names have therefore become popular.

The treatment with aligners generally includes designing a treatment path for a complete arch of teeth, wherein the teeth undergo a movement from the original position to a final desired position. A three-dimensional (3D) virtual model of the original arch of teeth is generated by scanning the teeth. The original virtual model may be uploaded to a suitable online platform or loaded into a suitable software. The orthodontist may then determine the desired, virtual, end model, i.e. the desired outcome of the orthodontic treatment as represented in a virtual model.

Then, a number of consecutive intermediate positions in between the original and the final position for the teeth are determined, including movements of teeth that may include rotation about a root, torsion, in-out displacement, and mesial-distal displacement. The intermediate positions, including the final position, may also be visualized through a 3D virtual model. The intermediate positions may be calculated using the aforementioned online platform or software.

The orthodontist then orders the creation of a series of shells (dental splints) to a manufacturer of choice and, when ready, the orthodontist provides them to the patient. These shells correspond to the arch of teeth in their intermediate positions and final desired position. The shells apply corrective forces to the arch of teeth when fitted onto the teeth because the shell is shaped according to the next intermediate position. I.e. they do not fit perfectly on the arch of teeth at a given moment, but rather exert pressures and loads on the teeth to force the teeth to assume the positions as defined in the shell. Each of the shells is used during a period of time, e.g. one or a few weeks. Once the teeth have assumed the desired position, a shell corresponding to the next intermediate position is to be fitted. This process goes on until ultimately, the teeth reach their final desired position.

When the intermediate teeth positions, and therefore the number and shape of the shells are being determined, the system performing the determinations may suggest including one or more so-called "attachments". The orthodontist may accept, partially accept or disregard the suggestions from the system. Alternatively or additionally, the orthodontist may decide to include one or more attachments independently from the suggestions of the system.

Throughout the present disclosure, an attachment may be regarded as an element configured to convert a structure of scarce retentivity, e.g. a tooth, into a structure of appropriate retentivity when bonded to the structure, e.g. the tooth. Bonding one or more attachments to the teeth generally provides an enhanced surface upon which the shell can act. Such improved surface may not only help to retain a shell in a desired position around an arch of teeth, but also to increase and direct a transfer of forces between the shell and the teeth. This can enable performing complicated teeth movements and/ or to complete some teeth movements which would not be performed in the absence of the attachments.

If one or more attachments are to be used, they become part of the 3D virtual model of the teeth, and the plurality of shells are designed to fit around the teeth having the attachments. Accordingly, each shell includes one or more pockets configured to match the shape of the envisaged attachments.

For positioning and bonding the attachments to the teeth, a transfer tray is generally used. A transfer tray is a custom-made shell configured to be placed around a dental arch, e.g. teeth in the initial original position, and has one or more pockets where the attachments are to be formed when the transfer tray is positioned around the dental arch. The pockets are then filled with a suitable bonding material and the tray is then positioned around a corresponding arch of teeth. The filled pockets are illuminated with suitable light to cause the bonding material to cure and harden. The transfer tray is then removed, the attachments having been created and bonded to the required teeth at their intended predetermined positions. The shells or aligners may then be positioned around the teeth with the attachments.

A precise amount of the bonding material should be introduced into the pockets of the transfer tray for creating the attachments envisaged in the 3D virtual models. If the bonding material is insufficient or excessive, the effect of the attachment may negatively affect the ability to control the forces transmitted by the shells to the teeth and the ability to retain the shells. A pocket that is not completely filled may even cause that the not well-formed attachment has to be replaced as the contact between the hardened bonding material and a tooth is insufficient. The bonding material of an overfilled pocket may overflow when placing the transfer tray around the teeth. Removing the excessive bonding material may be difficult, and not removing it completely may cause the shells to not fit well around the arch of teeth with the attachments.

In either case, when insufficient bonding material is used or when bonding material overflows the pockets, the created attachments are not according to the virtual model and thus the shells (aligners) that are to be used in the subsequent treatment are not adapted exactly to those attachments. This may delay the time required for reaching the desired final position of the teeth as additional intermediate shells may be needed for compensating the modifications introduced by the overfilled pockets, e.g. unpredictable or undesired movements of the teeth.

### SUMMARY

In a first aspect, an orthodontic attachment is provided. The orthodontic attachment comprises a prefabricated rigid body comprising a base surface configured for posterior bonding to a tooth. The prefabricated rigid body is sized and shaped to direct forces of a teeth shell when the teeth shell surrounds the orthodontic attachment and rests against the tooth.

In accordance with this aspect, an orthodontic attachment with a prefabricated rigid body is provided. Due to its prefabricated rigid body, it may be precisely bonded to a tooth of a patient. Problems caused by creating the attachments by filling pockets of a transfer tray with a curable material may therefore be avoided. A variety of materials and adhesives for the orthodontic attachment of this aspect may be used. An orthodontist may tailor the material and/or adhesive for an enhanced orthodontic treatment.

Throughout this disclosure, an orthodontic attachment may be understood as an orthodontic element configured to convert a structure of scarce retentivity, e.g. a tooth, into a structure of appropriate retentivity when bonded to the structure, e.g. the tooth. The orthodontic attachment may have different sizes and shapes, but in general is adapted to collaborate with a "shell" (also called "aligner"). The attachment may therefore generally not include any further elements such as e.g. wires, springs or elastic bands and they may generally have a convex outer shape such that a shell can both be manufactured relatively easily and be fitted over the attachment. Other devices, including e.g. brackets and other orthodontic treatment devices which are not adapted to function or collaborate with shells is herein not regarded as an orthodontic attachment.

A teeth shell surrounding the teeth and the orthodontic attachments treats the teeth. Such shells may also be called aligners. Herein a teeth shell may refer to a complete teeth shell, i.e. a shell configured to completely surround a dental arch, or to a segmented teeth shell, i.e. a shell configured to surround a plurality of teeth of a dental arch, the plurality of teeth being less teeth than the complete dental arch.

Throughout this disclosure, a rigid body may refer to a solid body which does not bend or change it shape significantly in normal use, e.g. at ambient temperature.

Throughout this disclosure, prefabricated may refer to the fact that that the rigid body is rigid already before the rigid body is bonded to a tooth.

The prefabricated rigid body of the orthodontic attachment may comprise ceramic, polysulfone, poly ether ether ketone or resin. These may be biocompatible materials suitable for transferring the forces of a teeth shell or aligner to a corresponding tooth.

The base surface of the orthodontic attachment may be a bare base surface in some examples, i.e. there may be nothing covering such surface. In other examples, the base surface may further comprise an adhesive material on the base surface. In some of these examples, e.g. if the adhesive material is an uncured material (i.e. a material which still has to be cured to harden, e.g. due to the action of light), the orthodontic attachment may further comprise a protective seal sealing the adhesive. These variants of attachments may allow to easily and precisely bond the attachments to a suitable tooth, either individually or with the help of a transfer tray.

In a further aspect, an orthodontic transfer tray is provided. The transfer tray comprises one or more pockets. One or more of the pockets comprise an orthodontic attachment as described herein removably arranged in a corresponding pocket. Such a transfer tray may facilitate bonding the orthodontic attachments to a dental arch. This may be faster and individually attaching each attachment.

In a further aspect, a computer-implemented method is provided. The method comprises visualizing a virtual model of a patient's teeth on a display; selecting one or more virtual attachments on the display, wherein selecting comprises selecting a material for a body of the one or more virtual orthodontic attachments and/or an adhesive for a base surface of the body of the one or more virtual orthodontic attachments; and generating one or more files comprising data for manufacturing one or more physical orthodontic attachments based on the one or more virtual orthodontic attachments.

Selecting the material and/or adhesive for one or more virtual attachments may allow improving a subsequent orthodontic treatment, as the material and/or adhesive may be tailored to specific purpose. For example, choosing certain materials may help to better control and/or transfer the forces directed to the teeth. The prefabricated rigid body may help to bond the attachment in a very precise manner to a tooth.

A virtual orthodontic attachment may herein be regarded as a digital version of a (real, physical) orthodontic attachment. A virtual orthodontic attachment may be displayed on a suitable display, and may be digitally or "virtually" manipulated through a suitable electronic user interface. Such an interface may be or include a tactile display, a computer keyboard, a computer mouse, or other. Besides a material and/or an adhesive for the attachment, a size and/or shape of the attachment may also be chosen or manipulated.

A virtual model of a patient's teeth may herein be regarded as a digital version of one or more teeth of a patient. Typically, a virtual model may include both complete arches of a patient's teeth, and may include part of the patient's jaws and gums as well. A virtual model of patient's teeth may be visualized on a display and may be manipulated through a suitable electronic user interface. The virtual model may have different formats, and be purely graphical, or in some examples may be such that it can be used in e.g. calculations, simulations involving finite elements. The virtual model of a patient's teeth may be a digital rigid model (3D model), a polygon mesh, a NURBS model or similar.

In some examples, selecting a material for a prefabricated rigid body of the one or more virtual orthodontic attachments and/or an adhesive for a base surface of the body of the one or more virtual orthodontic attachments may comprise selecting the material/and or adhesive from a set of predefined materials and/or adhesives. In other examples, selecting a material for a prefabricated rigid body of the one or more virtual orthodontic attachments and/or an adhesive for a base surface of the body of the one or more virtual orthodontic attachments may comprise selecting one or more virtual orthodontic attachments from a set of predefined virtual orthodontic attachments.

In some examples, the method may further comprise virtually attaching the selected one or more virtual orthodontic attachments to the virtual model of the patient's teeth and using the modified virtual model of the patient's teeth to simulate a virtual orthodontic treatment, in particular to generate a plurality of virtual teeth shells. Based on the simulation, the user may determine that the design of the orthodontic attachments, and optionally also the teeth shells, is satisfactory or not. If not, the user may further adapt the virtual orthodontic attachments and/or the teeth shells. For example, an orthodontist may decide to select a different material for the attachments or to fit one or more attachments to different teeth, or to add or remove one or more orthodontic attachments.

The teeth shells may include an initial or "starting shell, intermediate shells and a final shell. The initial shell is the first shell that the patient is to wear during an orthodontic treatment. The first shell may be configured to change the position of the dental arch from an original position, which is represented by the visualized model of the patient's teeth, to a first new position. The intermediate shells herein refer to the teeth shells which a patient is to wear for changing the position of a dental arch to a new position from one intermediate position to a subsequent one. The last or final shell is configured to change the position of the teeth to a final position. The orthodontic attachments may be removed after achieving the final position. In examples, a final shell may be a permanent shell that a patient wears e.g. at night time as a retainer for the achieved positions of the teeth.

In a further aspect, a computer program is provided which comprises instructions which, when the program is executed by a computer, cause the computer to perform the method disclosed above. In a further aspect, a computer readable medium comprising the computer program stored thereon is provided. In a further aspect, a computer readable carrier carrying the computer program is provided.

In yet a further aspect, a computer system is provided which comprises a memory and a processor, wherein the processor is configured to carry out the method according to any of the examples disclosed herein.

In yet a further aspect, an orthodontic treatment method is provided. The method comprises bonding one or more orthodontic attachments to one or more teeth of a dental arch of a patient; and arranging a teeth shell around the dental arch.

With this method, a more precise bonding of the orthodontic attachments may be obtained, and an orthodontic treatment may exactly or very closely follow the envisaged treatment. For example, achieving the final position of the teeth in the envisaged time and with the envisaged number of intermediate shells may be more probable than when the intermediate positions are calculated according to a theoretical model of teeth including an attachment and the shells are manufactured according to this same model.

In examples, the orthodontic attachments may comprise premanufactured rigid bodies as described in examples of this disclosure. Using such premanufactured attachments can further increase accuracy as compared to using orthodontic attachments which are made by curing an adhesive material filling the pockets of a transfer tray which is placed around a dental arch.

In yet a further aspect, a method for use in manufacturing of shells is provided. The method comprises bonding an orthodontic attachment as described according to the examples of the present disclosure to a tooth of a group of teeth of a patient. The method further comprises generating a 3D model of the group of teeth comprising the orthodontic attachment for subsequent manufacturing a teeth shell for the group of teeth.

As the 3D model includes the patient's teeth with the actual orthodontic attachments, a teeth shell can be more precisely manufactured than hitherto possible. Imprecisions related to generating an attachment by curing an adhesive material placed in the pockets of a transfer tray may be avoided or at least minimized.

The 3D model may be a virtual model. The virtual model may be used in a manufacturing process based on e.g. 3D printing (additive manufacturing) and/or vacuum forming.

### BRIEF DESCRIPTION OF THE DRAWINGS

Non-limiting examples of the present disclosure will be described in the following, with reference to the appended drawings, in which:
Figure 1A schematically illustrates an example of a mouth with a plurality of orthodontic attachments 10 bonded to the teeth;
Figure 1B schematically illustrates the mouth of figure 1A with a teeth shell surrounding the top dental arch and a bottom teeth shell surrounding the bottom dental arch;
Figure 2 schematically illustrates an example of a cross-sectional view of a transfer tray comprising a pocket filled with bonding material arranged around a tooth.
Figures 3A- 3C schematically illustrate different examples of orthodontic attachments;
Figure 4 schematically illustrates an example of a transfer tray including one or more prefabricated orthodontic attachments;
Figure 5 schematically illustrates a flow chart of a computer-implemented method; and
Figure 6 schematically illustrates a flow chart of an orthodontic treatment method.
Figure 7 schematically illustrates a flow chart of a method for manufacturing a teeth shell.

### DETAILED DESCRIPTION OF EXAMPLES

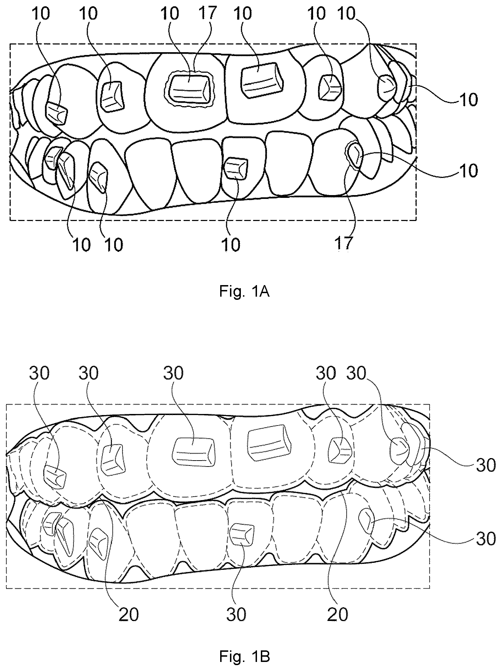

Figure 1A schematically illustrates an example of a mouth with a plurality of orthodontic attachments 10 bonded to the teeth. Figure 1B schematically illustrates the mouth of figure 1A with a top aligner or teeth shell 20 surrounding the top dental arch and a bottom aligner or shell surrounding the bottom dental arch. The teeth shells 20 comprise a plurality of pockets 30 which are configured to fit over the attachments 10. The attachments 10 bonded to the teeth help to retain the shell 20 in place and help to direct the forces exerted by the shell 20.

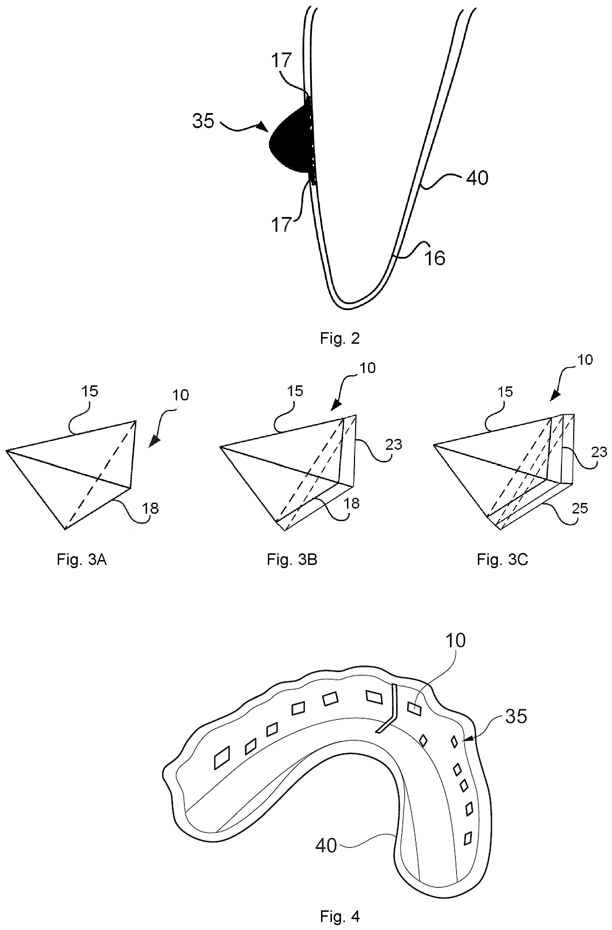

Figure 2 schematically illustrates an example of a cross-sectional view of a transfer tray 40 comprising a pocket 35 filled with bonding material 22 arranged around a tooth 16. The bonding material 22 may e.g. be curable with ultraviolet light. The amount of bonding material 22 in the pocket 35 is excessive and it has overflown when positioning the transfer tray 40 around the tooth 16. The amount of bonding material 22 which has overflown is generally known as flash 17. Flash 17 is also schematically illustrated for two attachments in figure 1A. These attachments with flash 17 would therefore have been made by curing bonding material 22.

As indicated previously, removing the flash 17 may be difficult, and not removing it completely may cause the shells 20 that will be used in treatment to not fit well around the arch of teeth with the attachments 10. This may delay the time required for reaching the desired final position of the teeth as additional intermediate shells may be needed for compensating the modifications introduced by the overfilled pockets, for example unpredictable or undesired movements of the teeth.

In a first aspect of the disclosure, an orthodontic attachment 10 is provided. The attachment 10 comprises a prefabricated rigid body 15 sized and shaped to direct forces of a teeth shell 20 when the teeth shell 20 surrounds and rests against a tooth to which the orthodontic attachment 10 is bonded. The prefabricated rigid body comprises 15 a base surface 18 configured for posterior bonding to a tooth of the dental arch i.e. the rigid body is formed before bonding actually takes place.

According to this aspect, an orthodontic attachment which may be bonded to a corresponding tooth in an easier and more precise manner than when creating an attachment by filling a pocket of a transfer tray with a curable resin is provided. As the body of the attachment is rigid, and therefore overfilling a pocket of a transfer tray with a curable resin is avoided, such an orthodontic attachment may be bonded to a corresponding tooth in a more precise manner.

Figures 3A - 3C schematically represent examples of a perspective view of different orthodontic attachments 10. Other shapes of the attachment are possible. The base surface 18 of the orthodontic attachment of figure 3A is a bare base surface. I.e., nothing is attached to the base surface. When the orthodontist is to bond an attachment with a bare base surface, an adhesive on the base surface of the attachment may be applied. As the body of the attachment is rigid and the base surface is bare, any suitable adhesive, including but not limited to curable adhesive materials, may be applied. The attachment may then be bonded to a tooth. A variety of adhesive materials may be used to bond the base surface of the prefabricated rigid body of the attachment to the tooth.

The orthodontic attachment of figure 3B further comprises an adhesive material 23 on the base surface 18. The adhesive material may be a cured adhesive in some examples, e.g. a layer of a light-cured resin. The layer of light-cured resin may have a shape configured to rest against a particular base surface.

The orthodontic attachments disclosed herein may generally be attached to teeth using direct bonding and/or indirect bonding techniques.

In some examples, the orthodontist may make an impression on teeth of a patient by causing the patient to bite a plaster such as a putty. The solidified putty with a negative impression of the patient's teeth may then be filled to create a physical model of the patient's teeth. The teeth of the physical model may be coated with a first separator material, which forms a separation layer on which a plurality of orthodontic attachments may be removably attached by applying a curable adhesive layer to the base surfaces of the orthodontic attachments. The curable adhesive may be cured, e.g. with UV (ultraviolet) light. A second separator material suitable for removably bonding the remaining outer surfaces of the prefabricated rigid body to a transfer tray may then be applied on those outer surfaces of the prefabricated rigid body, and silicone or other suitable materials for forming the transfer tray may be placed on top of the second separator material. When the transfer tray has hardened and been trimmed, the transfer tray with the plurality of orthodontic attachments may be separated from the physical model, e.g. by placing the assembly of the physical model, orthodontic attachments and transfer tray may in a suitable solvent. The remaining transfer tray with the orthodontic attachments may be cleaned, dried and stored. The base surfaces of the orthodontic attachments may now have a shape adapted to mate with an outer surface of a certain tooth of the patient.

For bonding the orthodontic attachments 10 to a patient's teeth, the teeth may be prepared e.g. by being cleaned, rinsed and air-dried. A suitable adhesive, e.g. a UV light curable adhesive, may be applied to the surfaces of the orthodontic attachments which are to face a certain tooth. The transfer tray may be placed around and pressed against dental arch. Depending on the adhesive applied to the attachment surfaces facing the teeth, the adhesive may be cured. The transfer tray may be then removed, leaving the orthodontic attachments bonded to the appropriate teeth of the patient.

The adhesive material may be an uncured adhesive in some other examples. In some of these examples, the orthodontic attachment 10 may further comprise a protective seal 25 sealing the uncured adhesive, e.g. a light protective seal for avoiding a prematurely curing of the adhesive material. A protective seal 25 may also be provided on top of other types of adhesive materials or even the bare base surface of the attachment body, not only uncured adhesive materials. The protective seal may help to keep a base surface of the attachment or an adhesive material in good conditions.

The prefabricated rigid body 15 of the orthodontic attachment may comprise ceramic, polysulfone, poly ether ether ketone (PEEK) or resin. A ceramic attachment body may facilitate directing forces and may be more durable that attachment bodies made of a cured adhesive material. Polysulfones are rigid, high-strength and transparent thermoplastics. Polyarylethersulfones (PAES), polyethersulfones (PES) and polyphenylene sulfones (PPSU) belong to the family of polysulfones. PPEK is a colourless organic thermoplastic polymer which is also considered to be a high-performance polymer together with polysulfones. High-performance polymers are polymers that meet higher requirements, e.g. have better mechanical properties and thermal stability, than other polymers known as standard or engineering polymers, e.g. polypropylene (PP) or polyethylene (PE). An example of a resin may be polycarbonate. By having more materials available to build an orthodontic attachment body other than curable adhesive materials, the orthodontic treatment may be adapted to each patient. For example, orthodontic attachments of different materials may be selected depending on the malocclusion to be treated and the envisaged duration of the treatment, the required characteristics such as durability, strength, and stiffness, roughness of the material, etc. Depending on the material selected, it may be possible to accelerate the treatment. Also, depending on the material selected, it may be possible to exert and/or control forces on the teeth better than with orthodontic attachments made of curable resins.

In some examples, the orthodontic attachment 10 may be a 3D printed orthodontic attachment. 3D printing, or additive manufacturing, is the construction of a three-dimensional object from a CAD model or a digital 3D model. The term "3D printing" may herein also be referred to as additive manufacturing and can refer to a variety of processes in which material is deposited, joined or rigidified under computer control to create a three-dimensional object, with material being added together, such as plastics, liquids or powder grains being fused together, typically layer by layer. 3D printing allows relatively easily producing many complex shapes or geometries. Therefore, it may be possible to obtain an orthodontic attachment which may precisely move the teeth, e.g. more precisely than orthodontic attachments made of curable resins.

Other procedures for obtaining an orthodontic attachment body may e.g. include injection moulding. Orthodontic attachments may also be made of ceramic materials or resins such as composite acrylic resin.

The material(s) for the body of the orthodontic attachment and the manufacturing technique(s) may e.g. be selected according to one or more of a desired shape and size of the attachment(s), the direction and magnitude of forces that are envisaged to be applied, and a desired duration of the treatment. More versatile orthodontic attachments than orthodontic attachments made of a curable adhesive material may therefore be obtained.

In a further aspect, an orthodontic transfer tray 40 comprising one or more pockets 35 is provided. A single one, a selection or all of the one or more pockets may include an orthodontic attachment 10 as described in any of the examples throughout this disclosure. The attachments may be removably arranged in a corresponding pocket. An example of such a transfer tray is schematically provided in figure 4. An orthodontic attachment as described herein may be referred to as a prefabricated attachment, as the attachment is not formed by curing an adhesive material inside the transfer tray pockets arranged around a dental arch of a patient as explained before. Due to the prefabricated rigid body 15 of the orthodontic attachments, a more precise bonding to the teeth, and therefore a more precise and reliable treatment may be performed.

The orthodontic attachment body comprises a bare base surface or any suitable type of adhesive and/or seal over the bare base surface, a transfer tray may be provided with the orthodontic attachments arranged in the transfer tray. I.e., the attachments are placed within their appropriate pocket, the lateral outer surfaces of the attachments following the inner surfaces of the corresponding pockets. The lateral outer surfaces are the outer surfaces of the attachment or attachment body that are not the base surface of the attachment or the attachment body.

Providing transfer tray 40 with a plurality of attachments 10 within their corresponding pockets 35 facilitates and speeds up a positioning and bonding all the necessary attachments for a dental arch on the dental arch. In some examples, the removable attachment between the attachments and the transfer tray may include a polymeric material, e.g. silicone, and/or wax. In general, any suitable material which allows to removably attach the attachments to the corresponding pockets may be used.

In some examples, the entire transfer tray including attachments may be sealed and packaged. Particularly if the attachments comprise an adhesive, the sealing may ensure that the adhesives do not cure or harden before an orthodontist wants to start bonding the attachments to a patient's teeth.

Instead of attaching the orthodontic attachments 10 with the transfer tray 40, each orthodontic attachment may also be bonded to a corresponding tooth individually, without the help of a transfer tray. Individual attachments may be individually packaged and/or sealed. The orthodontist may e.g. remove a protective seal 25 and bond an attachment 10 to a tooth by causing the base surface of the attachment to face a tooth surface and pressing the attachment towards the tooth surface. The attachments may or may not incorporate an adhesive already when packaged. Instead or in addition to such an adhesive layer, the orthodontist may apply an adhesive to the base surface of the attachment. The adhesive may need to be cured in some examples. In other examples, curing the adhesive material for bonding the attachment may not be necessary.

The orthodontic transfer 40 tray may be a thermoformed transfer tray in some examples. In other examples, the transfer tray may be a 3D printed transfer tray. Still in other examples, a transfer tray may have been obtained through other processes. A material of the attachments and of the transfer tray may be the same or may be different.

One or more orthodontic attachments 10 as described herein may be stored in a container such as a box. The manufactured attachments may therefore be stored and kept in good condition until they are to be used. Transport of the attachments from where they are fabricated to an orthodontist consult may also be easier. Similarly, one or more orthodontic transfer trays as described herein may be stored in a container such as a box.

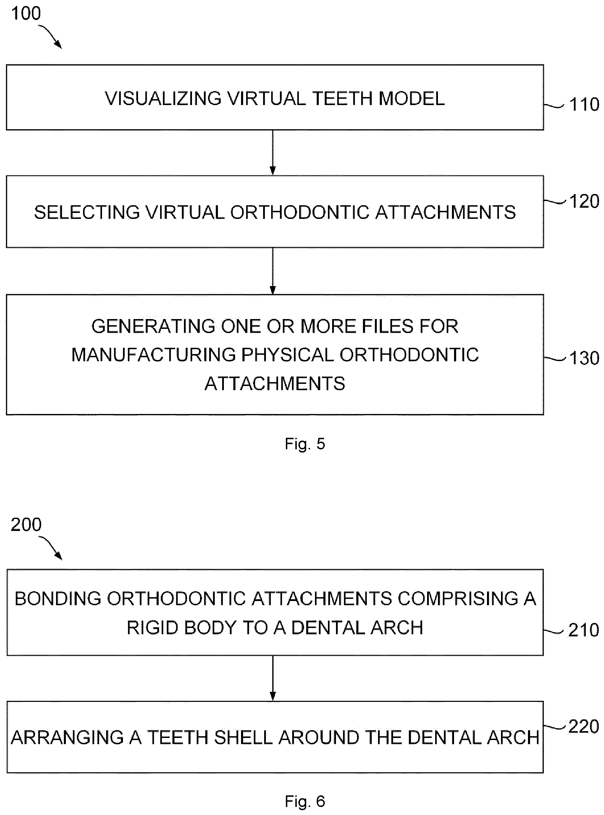

According to a further aspect of the disclosure, a computer-implemented method 100 for generating an orthodontic treatment is provided. Method 100 is schematically illustrated in the flow chart of figure 5. The method 100 comprises, at block 110, visualizing a virtual model of a patient's teeth on a display. The display may be any suitable display such as a tactile screen or a computer monitor. The method further comprises, at block 120, selecting one or more virtual attachments on the display, wherein selecting comprises selecting a material for a body of the one or more virtual orthodontic attachments and/or an adhesive for a base surface of the body of the one or more virtual orthodontic attachments. A user may use a computer keyboard, a computer mouse, a tactile display or other suitable user interface to perform such selection. The method further comprises, at block 130, generating one or more files comprising data for manufacturing one or more physical orthodontic attachments based on the one or more virtual orthodontic attachments. The method 100 may be carried out by a user such an orthodontist, or a plurality of users such as a team of professionals in an orthodontal or dental clinic.

The virtual model of the patient's teeth may be regarded as a digital version of a patient's set of teeth. The virtual model may particularly be a three-dimensional model, which may be computer generated and may be e.g. based on a plurality of images of the patient's teeth. A 3D scanner such as an intraoral scanner or a cone beam computed tomography (ct) scanner may be used to generate such images. Plaster models may also form the basis for a 3D model of the teeth. The scanner may be communicatively coupled to a computer system, either wireless or through cable. The computer system may have suitable software to generate a virtual model of the teeth. The virtual model may be or include a graphic model. In other examples, rather than the computer system generating the 3D virtual model of the teeth, the method may comprise receiving the virtual model of the patient's teeth. In these cases, the virtual model of the teeth may be generated elsewhere e.g. in another computer system or in another application.

The use of a virtual model of teeth allows visualization of the malocclusion, both for the patient and for the professionals treating the patient. The method may further comprise using the virtual model of the teeth to simulate a virtual orthodontic treatment, e.g. to simulate or generate a plurality of virtual shells. The virtual orthodontic attachments and teeth shells represent real, i.e. physical, orthodontic attachments and teeth shells that may be manufactured with a suitable process or technique. The physical teeth shells are configured to be attached to a surface of a set of teeth. Software capable of performing these calculations and simulations is known in the art. The simulation of a virtual orthodontic treatment may be performed before the selection of one or more virtual orthodontic attachments, as well as after the selection of one or more virtual attachments.

The latter allows for checking an interaction of the shells comprising pockets with the virtual model of the teeth comprising the one or more virtual attachments. I.e., the method may further comprise virtually attaching the virtual shells to the virtual model of the patient's teeth (one virtual shell at a time), the virtual model of the patient's teeth including the one or more virtual orthodontic attachments. The virtual teeth having the one or more virtual orthodontic attachments and a virtual shell thus move together in a simulation of the orthodontic treatment envisaged by the orthodontist. Based on such a simulation, the orthodontist may further adapt the virtual shells and/or the virtual orthodontic attachments to finally arrive at the most appropriate design for the shells to be manufactured. The way that the virtual shells interact with attachments to treat a patient's specific malocclusion may be tested using finite element methods or similar methods.

In some examples, selecting the material and/or adhesive for one or more virtual orthodontic attachments may comprise selecting the material/and or adhesive from a set of predefined materials and/or adhesives, e.g. suitable for orthodontic attachments. If a specific combination of material and adhesive selected is not suitable for fabricating a physical (i.e. real, not virtual) orthodontic attachment, the user may receive a message asking to choose a different combination of adhesive and material.

In other examples, selecting the material and/or adhesive for one or more virtual orthodontic attachments may comprise selecting one or more virtual orthodontic attachments from a set of predefined virtual orthodontic attachments. For example, the user may choose between a plurality of predefined attachments having specific combinations of materials and adhesives. The method may comprise visualizing a predefined set of virtual predefined orthodontic attachments on the display.

Selecting the material and/or adhesive may additionally or alternatively include accepting one or more suggestions from the computer program or system. The computer program or system may e.g. suggest one or more materials and/or adhesives. The computer program or system may e.g. suggest one or more attachment bodies, e.g. a body of a certain size, shape and material, and/or one or more adhesives.

The set of predefined materials and/or adhesives, as well as the set of predefined virtual orthodontist attachments may have any suitable menu structure to allow a professional to select a suitable orthodontic attachment, e.g. the sets may have a hierarchical menu structure. For example, the user may first select a certain type of material for the body of a virtual attachment, e.g. "polymer", then select a particular type of polymer, e.g. "thermoplastic", and then a particular thermoplastic, e.g. "polycarbonate". After having selected a particular thermoplastic, the user may e.g. then select an adhesive for the base surface of the attachment body suitable to be used with the previously selected polymer. It may be possible to select different materials and/or adhesives for different virtual orthodontic attachments.

Besides selecting the material and/or adhesive for the virtual orthodontic attachments, it may also be possible to select the size and/or shape and/or other parameters of the attachments. In some examples, a catalogue with a limited number of attachments may be available and a user has to select from one of the options in the catalogue. In some examples, a user(orthodontist) will simply select the attachments he/she has in stock already.

In other examples, further customization of the attachments may be possible. For example, a size and shape of a virtual attachment may be chosen after choosing the material for the virtual attachment body, but before selecting an adhesive, if any adhesive is desired. Other menu structure or ways of presenting the data to a user are possible.

As previously mentioned, once a user such as an orthodontist or other suitable professional has designed the orthodontic treatment according to the specific needs of a patient or adapted to the teeth of a specific patient, one or more files comprising data for manufacturing one or more physical orthodontic attachments from the one or more virtual orthodontic attachments may be generated and e.g. and sent to a manufacturer. The manufacturer may be in charge of fabricating physical orthodontic attachments alone, or of fabricating both physical orthodontic attachments and physical shells.

In some examples, a single file relating to a plurality of virtual attachments may be generated. I.e., a single file may comprise all the necessary data for manufacturing all the envisaged orthodontic attachments. The single file may also comprise data for manufacturing the shells. In other examples, a plurality of files, e.g. a file per orthodontic attachment, may be generated. In these other examples, further files for manufacturing the envisaged orthodontic shells, e.g. one file per shell, may be generated.

In some examples the file may be file for a 3D printer. In particular, moulds for subsequent manufacturing of the shells using thermoforming may be additively manufactured. The 3D printer may be physically located in the orthodontist or dental clinic or may be located elsewhere, e.g. at a manufacturer facility. The attachments may be individually 3D printed attachments, but may also be manufactured in batches in different manufacturing processes.

Examples of the method 100 may be implemented with hardware, software, firmware and combinations thereof. Those of skill in the art would further appreciate that the various illustrative logical blocks, modules, circuits, and algorithm steps described in connection with this method 100 may be implemented as electronic hardware, computer software, or combinations of both. To clearly illustrate this interchangeability of hardware and software, various illustrative components, blocks, modules, circuits, and steps have been described above with respect to method 100 generally in terms of their functionality. Whether such functionality is implemented as hardware or software depends upon the particular application and design constraints imposed on the overall system. Skilled artisans may implement the described functionality in varying ways for each particular application.

The various illustrative logical blocks, modules, and circuits described in connection with method 100 may be implemented or performed with one or more general-purpose processors, a digital signal processor (DSP), cloud computing architecture, an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

In a further aspect of the disclosure, a computer program is provided. The computer program comprises instructions which, when the program is executed by a computer, cause the computer to perform the method 100. A computer carrier or readable medium having stored thereon the computer program is also provided. In yet a further aspect of the disclosure, a computer system is provided. The computer system comprises a memory and a processor. The processor is configured to carry out the method 100.

The computer program may be in the form of source code, object code, a code intermediate source and object code such as in partially compiled form, or in any other form suitable for use in the implementation of the processes. The carrier may be any entity or device capable of carrying the computer program.

If implemented in software/firmware, the functions may be stored on or transmitted over as one or more instructions or code on a computer-readable medium. Computer-readable media includes both computer storage media and communication media including any medium that facilitates transfer of a computer program from one place to another.

A storage media may be any available media that can be accessed by a general purpose or special purpose computer. By way of example, and not limitation, such computer-readable media can comprise RAM, ROM, EEPROM, CD/DVD or other optical disk storage, magnetic disk storage or other magnetic storage devices, or any other medium that can be used to carry or store desired program code means in the form of instructions or data structures and that can be accessed by a general-purpose or special-purpose computer, or a general-purpose or special-purpose processor.

Also, any connection is properly termed a computer-readable medium. For example, if the software/firmware is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and Blu-ray disc where disks usually reproduce data magnetically, while discs reproduce data optically with lasers. Combinations of the above should also be included within the scope of computer-readable media.

In a further aspect of the present disclosure, an orthodontic treatment method 200 is provided. Method 200 is schematically illustrated by the flow chart of figure 6. Method 200 may e.g. be performed by one or more orthodontists at a dental clinic.

The method comprises, at block 210, bonding one or more orthodontic attachments 10 as described herein (physical orthodontic attachments) to a dental arch of a patient. For example, a plurality of orthodontic attachments, each attachment comprising a prefabricated rigid body sized and shaped to direct forces of a teeth shell when the teeth shell surrounds and rests against a tooth to which the orthodontic attachment is to be bonded, and the prefabricated rigid body comprising a base surface configured for posterior bonding to a tooth of the dental arch. The method further comprises, at block 220, arranging a teeth shell around the dental arch.

Bonding the one or more orthodontic attachments 10 may comprise indirect bonding or direct bonding. In indirect bonding, the procedure comprises surrounding the dental arch with an orthodontic transfer tray 40 which includes the one or more orthodontic attachments. The one or more orthodontic attachments may be placed within pockets 35 of the transfer tray and they may be removably attached to the transfer tray as explained previously. In some examples, a protective seal 25 may be removed from the base surface of the attachments to expose an adhesive layer. In other examples, an adhesive layer may be added to a base surface of the attachments. In some of these examples, the adhesive layer may be cured once the transfer tray has been arranged around the dental arch.

Bonding the one or more orthodontic attachments 10 may comprise individually bonding each of the one or more orthodontic attachments directly. In some examples, the attachments may include an adhesive layer 23 on the base surface of the attachment body, and a protective seal on the adhesive layer. Bonding the attachments may comprise removing the protective seal from the orthodontic attachments, orienting the attachments with the adhesive layer facing a corresponding tooth surface, and pressing the attachments against the corresponding tooth surface. In other examples, bonding may comprise applying an adhesive to the base surface of the bodies of the orthodontic attachments. Depending on the adhesive used, the adhesive may be cured or not after placing the attachments on a suitable tooth surface. A UV or blue light may be used to cure the adhesive.

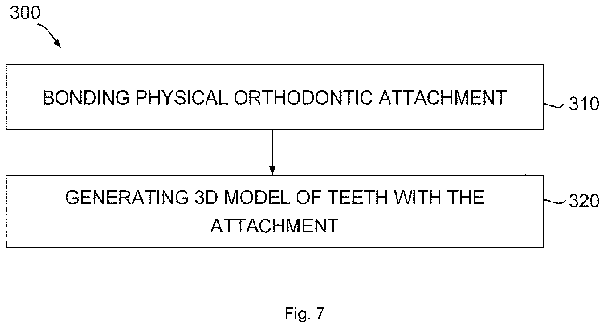

In a further aspect of the disclosure, a method 300 is provided. Method 300 is schematically illustrated by the flow chart of figure 7. Previous explanations, e.g. the explanations provided with respect to method 100 are also generally applicable to method 300.

The method comprises, at block 310, bonding 310 an orthodontic attachment 10 to a tooth of a group of teeth of a patient. In particular, the orthodontic attachment 10 may be an attachment as described throughout this disclosure, i.e. an orthodontic attachment comprising a prefabricated rigid body. A group of teeth may include a complete dental arch or a portion of a dental arch. In some examples, a group of teeth may comprise a single tooth.

Bonding of the attachment may be carried out according to any of the examples disclosed herein, including direct or indirect bonding.

The method further comprises, at block 320, generating a 3D model of the group of teeth comprising the orthodontic attachment 10 for manufacturing a teeth shell 20 for the group of teeth.

As the 3D model is generated based on the dental arch with one or more (actual physical) attachments 10 bonded to one or more teeth of a patient, precisely adapted teeth shells, e.g. may therefore be generated. That is to say, as the basis for manufacturing the teeth shell is one or more teeth with one or more attachments already bonded to the teeth, imprecisions arising from generating the teeth shells 20 from an estimated position for the attachments and trying to create the attachments 10 in the desired positions are avoided or minimized. Even if the attachments 10 were not precisely according to an originally desired shape (and this should be avoidable with processes according to the present disclosure), the shells are in any case adapted to the actual shape of the attachments. It is noted that this method may also be used in case the orthodontic attachments are manufactured in the hitherto known manner of filling pockets of a transfer tray with curable resin.

In some examples, the 3D model may be a physical model. For instance, as explained previously, the orthodontist may make an impression of teeth of a patient by causing the patient to bite a plaster such as a putty. The solidified putty with a negative impression of the patient's teeth may then be filled to create a physical model of the patient's teeth. In some other examples, the 3D model may be a virtual model. For instance, and also as explained previously, the group of teeth may be scanned, e.g. with an intraoral scanner or a cone beam computed tomography (ct) scanner and the 3D model may be derived from multiple digital images.

If the 3D model is a virtual model, the method may further comprise generating a file comprising data for manufacturing a (physical) teeth shell (or a mould therefore) based on the 3D model. In some examples, the file may be a file for a 3D printer. In some examples, the method may further comprise sending the generated file to a manufacturer.

The method may further comprise determining a plurality of additional teeth shells 20 based on the 3D model. In this manner, not only one, e.g. the first teeth shell, may be generated considering a "real" initial position of the teeth with the attachments, but also further teeth shells may be generated considering such "real" initial position.

The shells may be manufactured using e.g. thermoforming. In thermoforming, 3D molds corresponding to the various positions of the dental arch may be created, e.g. using 3D printing techniques. Then, a plastic sheet or plastic film may be heated to a pliable forming temperature, and formed to the specific shape in the mold, and trimmed to create a usable product. The sheet, or "film" may be heated in an oven to a high-enough temperature that permits it to be stretched into or onto a mold and cooled to a finished shape. Vacuum forming is a specific type of thermoforming in which a sheet of plastic is heated to a forming temperature, and then stretched onto a mould, and forced against the mould by using a vacuum.

For completeness, a number of aspects of the present disclosure are set out in the following numbered clauses:
Clause 1. An orthodontic attachment comprising:
   a prefabricated rigid body comprising a base surface configured for posterior bonding to a tooth,
   the prefabricated rigid body being sized and shaped to direct forces of a teeth shell when the teeth shell surrounds the orthodontic attachment and rests against the tooth.
Clause 2. The orthodontic attachment of clause 1, wherein the base surface of the orthodontic attachment is a bare base surface.
Clause 3. The orthodontic attachment of clause 1, further comprising an adhesive material on the base surface.
Clause 4. The orthodontic attachment of clause 3, wherein the adhesive material is different from a material of which the prefabricated rigid body is made of.
Clause 5. The orthodontic attachment of clause 3 or clause 4, further comprising a protective seal or cover for sealing or covering the adhesive.
Clause 6. The orthodontic attachment of any of the preceding clauses, wherein the prefabricated rigid body of the orthodontic attachment comprises ceramic, polysulfone, poly ether ether ketone or resin.
Clause 7. An orthodontic transfer tray comprising one or more pockets carrying an orthodontic attachment according to any of the preceding clauses, the attachment being removably arranged in a corresponding pocket.
Clause 8. A computer-implemented method comprising:
   visualizing a virtual model of a patient's teeth on a display;
   selecting one or more virtual attachments on the display, wherein selecting comprises selecting a material for a body of the one or more virtual orthodontic attachments and/or an adhesive for a base surface of the body of the one or more virtual orthodontic attachments; and
   generating one or more files comprising data for manufacturing one or more physical orthodontic attachments based on the one or more virtual orthodontic attachments.
Clause 9. The method of clause 7, wherein selecting a material for a body of the one or more virtual orthodontic attachments and/or an adhesive for a base surface of the body of the one or more virtual orthodontic attachments comprises selecting the material/and or adhesive from a set of predefined materials and/or adhesives.
Clause 10. The method of clause 8, wherein selecting a material for a body of the one or more virtual orthodontic attachments and/or an adhesive for a base surface of the body of the one or more virtual orthodontic attachments comprises selecting one or more virtual orthodontic attachments from a set of predefined virtual orthodontic attachments.
Clause 11. The method of any of clauses 8 - 10, further comprising sending the one or more generated files to a manufacturer.
Clause 12. The method of any of clauses 8 - 11, wherein the one or more files are files for a 3D printer, and optionally wherein the files are for 3D printing of moulds.
Clause 13. The method of any of clauses 8 - 12, further comprising virtually attaching the selected one or more virtual orthodontic attachments to the virtual model of the patient's teeth and using the modified virtual model of the patient's teeth to simulate a virtual orthodontic treatment, in particular to generate a plurality of virtual intermediate teeth shells.
Clause 14. The method of any of clauses 8 - 13, further comprising receiving or generating the virtual model of the patient's teeth.
Clause 15. A computer program comprising instructions which, when the program is executed by a computer, cause the computer to carry out the method of any of clauses 8 - 14.
Clause 16. A computer system comprising:
   a memory and a processor, wherein the processor is configured to carry out the method according to any of clauses 8 - 14.
Clause 17. An orthodontic treatment method comprising:
   bonding one or more (physical) orthodontic attachments to one or more teeth of a dental arch of a patient, each orthodontic attachment comprising:
   a prefabricated rigid body comprising a base surface configured for subsequent bonding to a tooth, and
   the prefabricated rigid body being sized and shaped to direct forces of a teeth shell when the teeth shell surrounds the orthodontic attachment and rests against the tooth; and the treatment method further comprising:
      arranging a teeth shell around the dental arch.
Clause 18. The method of clause 17, wherein bonding the one or more orthodontic attachments comprises surrounding the dental arch with an orthodontic transfer tray which includes the one or more orthodontic attachments.
Clause 19. The method of clause 17, wherein bonding the one or more orthodontic attachments comprises individually bonding each of the one or more orthodontic attachments.
Clause 20. The method of clause 17, wherein bonding the one or more orthodontic attachments comprises removing a protective seal from around at least the base surface of the orthodontic attachments to expose an adhesive layer.
Clause 21. The method of clause 17, wherein bonding the one or more orthodontic attachments comprises applying an adhesive to the base surface of the bodies of the orthodontic attachments.
Clause 22. A method comprising:
   bonding an orthodontic attachment, and optionally the orthodontic attachment according to any of clauses 1 - 6 to a tooth of a group of teeth of a patient;
   generating a 3D model of the group of teeth including the orthodontic attachment, wherein the 3D model is usable for manufacturing a teeth shell for the group of teeth.
Clause 23. The method of clause 22, wherein the 3D model is a physical model.
Clause 24. The method of clause 22, wherein the 3D model is a virtual model.
Clause 25. The method of clause 24, further comprising generating a file comprising data for manufacturing a (physical) teeth shell based on the 3D model.
Clause 26. The method of clause 25, wherein the file is a file for a 3D printer, and optionally wherein the file is for 3D printing a mould.
Clause 27. The method of clause 25 or clause 26, further comprising sending the generated file to a manufacturer.
Clause 28. The method of any of clauses 22 - 27, further comprising determining a plurality of additional teeth shells based on the 3D model.
Clause 29. The method of any of clauses 22 - 28, wherein the group of teeth is a complete dental arch.
Clause 30. The method of any of clauses 22 - 28, wherein the group of teeth is a segment of a dental arch.
Clause 31. The method of any of clauses 24 - 30, wherein the 3D model is generated by a 3D scanner, in particular by an intraoral scanner or a cone beam computed tomography scanner.
Clause 32. The method of any of clauses 22 - 31, wherein the orthodontic attachment is directly bonded to the tooth.
Clause 33. The method of any of clauses 22 - 32, wherein the orthodontic attachment is bonded using a transfer tray.
Clause 34. The method of any of clauses 22 - 33, comprising bonding a plurality of attachments prior to generating the 3D model of the group of teeth.
Clause 35. The method of any of clauses 22 - 34, and further comprising manufacturing the teeth shell.

Although only a number of examples have been disclosed herein, other alternatives, modifications, uses and/or equivalents thereof are possible. Furthermore, all possible combinations of the described examples are also covered. Thus, the scope of the present disclosure should not be limited by particular examples, but should be determined only by a fair reading of the claims that follow.

## Claims

1. An orthodontic attachment (10) comprising:
a prefabricated rigid body (15) comprising a base surface (18) configured for posterior bonding to a tooth,
the prefabricated rigid body (15) being sized and shaped to direct forces of a teeth shell (20) when the teeth shell (20) surrounds the orthodontic attachment and rests against the tooth.

2. The orthodontic attachment of claim 1, wherein the base surface of the orthodontic attachment is a bare base surface.

3. The orthodontic attachment of claim 1, further comprising an adhesive material (23) on the base surface.

4. The orthodontic attachment of claim 3, wherein the adhesive material (23) is different from a material of the prefabricated rigid body.

5. The orthodontic attachment of claim 3 or claim 4, further comprising a protective seal (25) sealing the adhesive (23).

6. The orthodontic attachment of any of the preceding claims, wherein the prefabricated rigid body (15) of the orthodontic attachment comprises ceramic, polysulfone, poly ether ether ketone or resin.

7. An orthodontic transfer tray (40) comprising one or more pockets (35), one or more of the pockets (35) comprising an orthodontic attachment (10) according to any of the preceding claims removably arranged in a corresponding pocket (35).

8. A method (300) for manufacturing a teeth shell (20) comprising:
bonding (310) an orthodontic attachment (10) according to any of claims 1 - 6 to a tooth of a group of teeth of a patient; and
generating (320) a 3D model of the group of teeth including the orthodontic attachment (10) for subsequent manufacturing a teeth shell (20) for the group of teeth.

9. The method of claim 8, wherein the 3D model is a physical model.

10. The method of claim 8, wherein the 3D model is a virtual model.

11. The method of claim 10, further comprising generating a file comprising data for manufacturing a teeth shell based on the 3D model.

12. The method of claim 10 or claim 11, wherein the 3D model is generated by a 3D scanner, in particular by an intraoral scanner or a cone beam computed tomography scanner.

13. The method of any of claims 7 - 12, wherein the orthodontic attachment (10) is directly bonded to the tooth.

14. The method of any of claims 7 - 13, further comprising determining a plurality of additional teeth shells (20) based on the 3D model.

15. The method of any of claims 7 - 14, wherein the group of teeth is a complete dental arch or a segment of a dental arch.
